# EUROPEAN PATENT SPECIFICATION

(11) **EP 2 282 460 B1**
(45) Date of publication and mention of the grant of the patent: **03.12.2014**
(21) Application number: 09761255.0
(22) Date of filing: 10.04.2009
(51) Int. Cl.: H04L 12/58, H04L 12/18

(54) **DOCUMENT TRANSMISSION REALIZING METHOD, APPARATUS AND USER DEVICE FOR MESSAGE BUSINESS**
VERFAHREN ZUR DOKUMENTENÜBERTRAGUNG, VORRICHTUNG UND BENUTZERVORRICHTUNG ZUR NACHRICHTENTRANSAKTION
PROCÉDÉ DE RÉALISATION D ÉMISSION DE DOCUMENTS, APPAREIL ET DISPOSITIF D UTILISATEUR POUR ACTIVITÉ DE MESSAGERIE

(30) Priority: 12.06.2008 CN 200810110650
(43) Date of publication of application: 09.02.2011
(73) Proprietor: Huawei Technologies Co., Ltd., Longgang District, Shenzhen Guangdong 518129 (CN)
(72) Inventor: QU, Yanzhuang, Shenzhen, Guangdong 518129 (CN); LI, Wei, Shenzhen Guangdong 518129 (CN); LUO, Xianqiang, Shenzhen, Guangdong 518129 (CN); DIAO, Lei, Shenzhen, Guangdong 518129 (CN); SHI, Lei, Shenzhen, Guangdong 518129 (CN); HUANG, Weili, Shenzhen, Guangdong 518129 (CN); XIE, Dijin, Shenzhen, Guangdong 518129 (CN); CHEN, Liang, Shenzhen, Guangdong 518129 (CN); YE, Chuanhu, Shenzhen, Guangdong 518129 (CN); CHEN, Baiping, Shenzhen, Guangdong 518129 (CN); WU, Peng, Shenzhen, Guangdong 518129 (CN)
(74) Representative: Isarpatent
(86) International application number: PCT/CN2009/071237
(87) International publication number: WO 2009/149630

(56) References cited:
- EP-A1- 1 615 403
- WO-A1-2008/064356
- WO-A2-02/39229
- WO-A2-2008/030494
- CN-A- 1 897 588
- CN-A- 101 043 345
- CN-A- 101 291 300
- CHEN RONG: 'TRAFFIC CONTROL SOLUTION FOR SCHOOL NETWORK' JOURNAL OF SICHUAN UNIVERSITY OF SCIENCE & ENGINEERING(NATURAL SCIENCE EDITION) vol. 20, no. 6, 31 December 2007, pages 60 - 62, XP008147206

## Description

### FIELD OF THE TECHNOLOGY

The present invention relates to the field of network communications technologies, and in particular, to a method, an apparatus, and a user equipment (UE) for implementing file transmission in a message service.

### BACKGROUND OF THE INVENTION

At present, a message service provides increasingly diverse contents. For example, the message service can provide texts, images, audios, videos, games and other contents.

When a server needs to send the same file to a plurality of users, all the users need to obtain the complete file from the server. The same file sent by the server to the users may be provided by a UE or provided by the server.

However, it has become apparent that the current process of file transmission in the message service has the following problems: Since the server needs to send the complete file to a plurality of UEs, the server has a heavy data transmission burden; moreover, the data transmission burden of the server increases with the increase of the number of users receiving the message.

EP 1615403 A1 discloses an efficient one-to-many content distribution method in a peer-to-peer computer network. The content distribution method divides the content to be distributed into many small blocks. Each of the content blocks then is assigned to a node, which can be a content-requesting node, a non-content-requesting node or a source node. The block is first sent by source nodes to the assigned peer node (or the peer node in charge of redelivery). The assigned peer node then forwards the block to the other two peer nodes.

WO 02/39229 A2 discloses a method and system for providing a uniform multicast messaging service such that a brief message concerning a particular subject is simultaneously issued from a server to multiple clients. An alert report administrator issues an alert by sending an alert report message to the server. This message is then multicast simultaneously to all registered clients. At the client, the alert report is processed to provide a notification on the user's PC display. The alert notification takes the form of a detailed report that is displayed to the user. That report includes a date/time stamp, a brief message subject, and a URL. If the user clicks on, or otherwise selects, the alert report, the client navigates the user's pre-existing web browser application to the URL identified in the alert report message.

### SUMMARY OF THE INVENTION

The present invention is directed to a method, an apparatus, and a UE for implementing file transmission in a message service, so as to reduce the data transmission burden of a network side device such as an application server, and improve the file transmission rate in the message service.

According to the first aspect of the present invention a method for transmitting files over a telecommunication network offering a message service includes:
dividing, by an application server, a file of the message service that needs to be sent to UEs into at least two file blocks; and
transmitting, by the application server, the divided file blocks to at least two UEs separately, and delivering, by the application server, notification information to each UE, so as to enable the UE to obtain un-received file blocks from other UEs,
wherein the delivering, by the application server, the notification information to each UE comprises:
   sending, by the application server, address information of the UEs and file block information received by the UEs to each UE; and
   the method further comprises:
      receiving, by the application server, information of requesting the file blocks sent by the UE when determining, by the UE, that the file blocks fail to be successfully obtained from other UE; and
      determining, by the application server, the file blocks requested by the UE and sending the file blocks requested by the UE.

According to the second aspect of the present invention a method for implementing a message service includes:
receiving, by a UE, notification information transmitted by an application server, wherein the notification information comprises address information of the UEs and file block information received by the UEs;
establishing, by the UE, connections with other UEs according to the notification information, and obtaining, from other UEs, un-received file blocks; and
combining, by the UE, the obtained file blocks into a file of the message service, and
when determining that the file blocks fail to be successfully obtained from other UEs, requesting, by the UE, the application server for the file blocks failing to be successfully obtained.

According to the third aspect of the present invention an application server includes:
a dividing module, configured to divide a file of the message service that needs to be sent to UEs into at least two file blocks; and
a sending module, configured to transmit the file blocks divided by the dividing module to at least two UEs separately, and deliver notification information of obtaining the file blocks to each UE, so as to enable the UE to obtain un-received file blocks from other UEs, wherein the notification information comprises address information of the UEs and file block information received by the UEs;
a first receiving module, configured to receive information of requesting the file blocks sent by the UE when determining, by the UE, that the file blocks fail to be successfully obtained from other UE; and
a determining module, configured to determine the file blocks requested by the UE according to the information received by the first receiving module, and notify the sending module to send the file blocks requested by the UE.

According to the fourth aspect of the present invention a UE includes:
a second receiving module, configured to receive notification information transmitted by an application server, wherein the notification information comprises address information of the UEs and file block information received by the UEs;
an obtaining module, configured to establish connections with other UEs according to the notification information received by the second receiving module, and obtain, from other UEs, file blocks that are un-received by the UE, to which the obtaining module belongs, from the application server;
a combining module, configured to combine the file blocks obtained by the UE into a file of a message service; and
a request module), configured to request the application server for the file blocks failing to be successfully obtained when it is determined that the obtaining module fails to successfully obtain the file blocks from other UEs.

It can be seen from the technical solutions described above that, by dividing the file of the message service into file blocks, sending the blocks (file blocks) to the UEs, and enabling each UE to obtain corresponding file blocks from other UEs, each UE can obtain the complete file of the message service by using the file blocks obtained from other UEs, so that the process that each UE needs to obtain the complete file from the network side is avoided, thereby reducing the data transmission burden of a network side device such as an application server; moreover, the data transmission burden of the network side device does not increase with the increase of the number of users receiving the message. Moreover, in the present invention, since the UEs can provide the file blocks to other UEs, a plurality of file transmission sources is distributed, thereby improving the file transmission rate in the message service.

### BRIEF DESCRIPTION OF THE DRAWINGS

FIG. 1 is a schematic view of a process for implementing file transmission in a message service according to an embodiment of the present invention;
FIG. 2 is a flow chart of a process for implementing file transmission in a message service according to an embodiment of the present invention;
FIG. 3 is a schematic view of an apparatus for implementing file transmission in a message service according to an embodiment of the present invention; and
FIG. 4 is a schematic view of a UE according to an embodiment of the present invention.

### DETAILED DESCRIPTION OF THE EMBODIMENTS

In the embodiments of the present invention, a message service may be a message service in an Internet protocol (IP) multimedia subsystem (IMS) domain, or a message service in other network domains, for example, a multimedia message service in a circuit switched domain or a packet switched domain. In the embodiments of the present invention, a network side needs to divide a file of a message service involving a plurality of receivers into blocks. The message service may be initiated by a UE or actively initiated by the network side, that is to say, the file of the message service may be sent by the UE or actively provided by the network side (for example, the network side issues the file). The file may be in the form of texts, images, audios, videos, games or the like. The embodiments of the present invention do not limit the network domain to which the message service belongs, the initiator of the message service (that is to say, do not limit the provider of the file of the message service), and the form of the file.

The network side may determine whether to divide the file of the message service into blocks according to a determination result. For example, the network side may determine a size of the file of the message service that needs to be sent to a plurality of receivers, and divide the file into blocks when the size of the file reaches a preset size. For another example, the network side may determine a type of the file of the message service that needs to be sent to a plurality of receivers, and divide the file into blocks when the type of the file is a preset type (such as video). For still another example, the network side may determine the number of receivers of the message service, and divide the file into blocks when the number of receivers reaches a preset number. Alternatively, the network side may also determine to divide the file into blocks according to a block division indication carried in a message sent by the UE. Moreover, the network side may also determine whether to divide the file into blocks according to a determination result of any combination of the determination of the size of the file, the determination of the type of the file, the determination of the number of receivers, and the block division indication carried in the message. In this paragraph, the word "reach" may also be replaced by "exceed". The embodiments of present invention do not limit the specific implementation process of determining, by the network side, whether to divide the file of the message service into blocks.

In the process of dividing, by the network side, the file of the message service into blocks, the network side may divide the file into a plurality of file blocks, and the number of the file blocks may depend on the number of receivers of the message service (i.e., the number of receiver UEs). For example, the number of the file blocks is equal to the number of receivers, or for another example, the number of the file blocks is equal to the number of receivers plus 1. The number of the file blocks may depend on other factors, such as a preset value. The preset value may be greater than or less than the number of receivers of a certain message service, but the preset value of the number of the file blocks should be not less than 2.

In the case that the number of the file blocks depends on the number of receivers of the message service, in consideration of that the number of receivers may be too large or other restrictions may exist (such as the size of the file block should be not less than a preset size), the embodiments of the present invention may further limit the number of the file blocks, for example, when the number of receivers exceeds a preset value, the number of the file blocks should be equal to the preset value. In this paragraph, the preset value may be a maximum number of transfer control protocol (TCP) connections of the network side device or a value set by the manager according to the actual operating condition of the network. The embodiments of the present invention do not limit the specific implementation of the preset value.

After the network side divides the file of the message service into blocks, the network side needs to send the file blocks and notification information to the receivers of the message service, where the notification information is used for notifying the UE to obtain un-received file blocks from other UEs. The file blocks and the notification information may be sent to the UE at the same time (that is, the file blocks and the notification information may be sent to the UE through the same message or data packet), or may be sent to the UE separately, that is, the file blocks and the notification information may be sent to the UE through different messages or data packets, for example, the notification information is sent first and then the file blocks are sent. It should be noted that the UE may receive only the notification information, or receive both the file blocks and the notification information, and the UE may receive one or more file blocks. When the UE receives a plurality of file blocks, the file blocks may be all file blocks of the file or a part of file blocks of the file. When the file blocks received by one or more UEs are all the file blocks of the file, the network side does not transmit all the file blocks of the file to all receiver UEs; that is to say, although one or more UEs can receive all the file blocks of the file, not all receiver UEs receive all the file blocks of the file. Several different cases are described in the following.
Example 1: When the number of receivers of the message service is m, the network side divides the file of the message service into m file blocks, and sends one file block and notification information to each receiver UE, so that the m file blocks are sent to the m receivers separately. At this time, the file block and the notification information may be sent through the same message or data packet or through different messages or data packets.
Example 2: When the number of receivers of the message service is m, the network side divides the file of the message service into m file blocks, and sends all file blocks of the file and notification information to one receiver UE, and sends one file block and notification information to other receiver UEs. Similarly, the file block and the notification information may be sent through the same message or data packet or through different messages or data packets. Moreover, the network side may also send all file blocks of the file and notification information to two (at this time, m>2) or three (at this time, m>3) receiver UEs.
Example 3: When the number of receivers of the message service is m, the network side divides the file of the message service into m+1 file blocks, and sends two file blocks and notification information to one receiver UE, and sends one file block and notification information to other receiver UEs. Moreover, here, m+1 may also be m+2 or m+3, and correspondingly, two or three receiver UEs receive two file blocks and notification information. Here, Example 3 may be altered so that the network side sends all file blocks of the file and notification information to one or two (at this time, m>2) or three (at this time, m>3) receiver UEs.
Example 4: When the number of receivers of the message service is m, the network side divides the file of the message service into m-1 file blocks, and sends only notification information to one receiver UE, and sends one file block and notification information to other receiver UEs. Moreover, here, m-1 may also be m-2 or m-3, and correspondingly, two or three receiver UEs only receive the notification information. Here, Example 4 may be altered so that the network side sends all file blocks of the file and notification information to one or two (at this time, m>2) or three (at this time, m>3) receiver UEs.

The embodiments of the present invention are not limited to the methods described above, and it only needs to ensure that the network side does not send all file blocks to all receivers. Other implementation methods will not be described herein one by one. It should be noted that the determination of the number of divided file blocks of the file by the network side and the determination by the network side to send what file blocks to which UEs may be referred to as a file allocation algorithm, and the file allocation algorithm may be implemented in various forms, that is to say, the network side may divide the file of the message service into blocks and send the file blocks according to the file allocation algorithm.

The network side sends the notification information to the receiver UE, so as to enable the UE to obtain un-received file blocks from other UEs. The specific contents of the notification information may be set according to actual requirements, and one kind of specific contents of the notification information may be UE list information. The content of the UE list information may include two parts, one part is address information of the UEs and the other part is file block information received by the UEs. The UE list information may include all receiver UEs, or only include all receiver UEs that have received the file blocks, or only include all receiver UEs that have received all the file blocks of the file of the message service. Moreover, the UE list information received by each receiver UE may be the same or different, for example, as for a UE1, the UE list information received by the UE1 does not include the address information of the UE1 and the file block information received by the UE1. The file block information may be a byte range of the file block in the whole file, or may be a file block number identification.

The network side may carry the notification information in a session description protocol (SDP) message, and send the SDP message to the UE. Definitely, the network side may also adopt other messages, and the embodiments of the present invention neither limit the specific form of the message, nor limit the specific method for carrying the notification information in the message.

After receiving the notification information transmitted from the network side, the UE establishes connections with other UEs according to the notification information, and obtains the file blocks of the message service from other UEs through the established connections. The file blocks obtained by the UE from other UEs are the file blocks that are unsent by the network side to the UE. Then, the UE combines the obtained file blocks into the file of the message service. Here, the file blocks obtained by the UE may include the file blocks received by the UE from the network side and the file blocks obtained by the UE from other UEs, or may only include the file blocks received by the UE from other UEs. Moreover, in the above description, the UE may establish a connection with another UE according to the notification information, so as to obtain all the file blocks that are unsent by the network side to the UE; or the UE may establish connections with a plurality of other UEs, so as to obtain all the file blocks that are unsent by the network side to the UE. This depends on the method of sending, by the network side, the file blocks to the UE. For example, in the case that the network side sends all the file blocks of the file to the UE1, other UEs may obtain, by establishing a connection with the UE1, the file blocks that are unsent by the network side to other UEs. For another example, in the case that the network side divides the file into m file blocks and sends one file block to each of m UEs, each UE obtains un-received m-1 file blocks by establishing a connection with each of other UEs. The specific process of establishing connections among the UEs is relevant to how the network side sends the file blocks to the UEs, and various different cases will not be described herein one by one. The embodiments of the present invention neither limit the specific implementation process of establishing connections among the UEs, nor limit the specific implementation process of combining, by the UE, the file blocks into the file of the message service.

In the process that the UE obtains, from other UEs, the file blocks that are unsent by the network side to the UE, the UE may fail to successfully obtain, from other UEs, the file block that is unsent by the network side to the UE, and in this case, the UE may request the network side for the file block failing to be successfully obtained. The network side may send the file block to the UE according to the request of the UE.

The reason why the UE cannot successfully obtain, from other UEs, the file blocks that are unsent by the network side to the UE may be that the connections cannot be successfully established among the UEs, or that the file block transmission fails although the connections are successfully established. The reason why the connections cannot be successfully established among the UEs may be that the UEs are offline or shut down. The embodiments of the present invention neither limit the reason why the file blocks cannot be successfully obtained from other UEs, nor limit the reason why the connection establishment fails.

There are many cases where the UE cannot successfully obtain, from other UEs, the file blocks that are unsent by the network side to the UE, and then requests the network side for the file blocks, and two cases are described briefly in the following.
Example 1: In the case that the network side sends all the file blocks of the file to a UE2 and a UE3, the UE1 selects the UE2 receiving all the file blocks of the file, and implements an operation of establishing a connection with the UE2. When the UE1 fails to establish the connection with the UE2, the UE1 may select the UE3, and implement an operation of establishing a connection with the UE3, so as to obtain all the file blocks that are unsent by the network side to the UE1. If the UE1 also fails to establish the connection with the UE3, the UE1 may request the network side for the un-received file blocks. Of course, the UE1 may also directly request the network side for the un-received file blocks after the UE1 fails to establish the connection with the UE2.
Example 2: In the case that the network side sends a different file block to each UE separately, if the UE1 fails to establish a connection with the UE2, the UE1 requests the network side for the file blocks received by the UE2.

The UE may send request information to the network side through an existing message or a newly added message, so as to request the network side for a certain file block. For example, the embodiments of the present invention may appropriately extend the draft-garcia-mmusic-file-transfer-mech-01 protocol to implement Point-to-Point (p2p) transmission among UEs. The embodiments of the present invention do not limit the specific implementation process of requesting, by the UE, the network side for the file blocks.

After receiving the information of requesting a file block sent by the UE, the network side determines the file block requested by the UE and sends the file block to the UE. Definitely, the network side may also send the file block to each UE. The embodiments of the present invention do not limit the protocol and message name adopted by the network side for sending the file block to the UE according to the information of requesting the file block.

Since the network side may send one or more file blocks again according to the request of the UE, the network side needs to store the file blocks after sending the file blocks for the first time. The network side may store the file rather than the file blocks, divide the file into file blocks again after receiving the request, and then send the requested file blocks to the UE. The network side may perform aging processing on the stored file blocks or file. Existing aging processing methods may be adopted to perform the aging processing, and the details will not be described herein again. In the above description, a file block is a block.

It can be seen from the above description that, the embodiments of the present invention introduce the P2P technology in the file transmission process of the message service (adopt the P2P technology between UEs). By dividing the file of the message service into file blocks, sending the file blocks and the notification information to the UE, and enabling each UE to obtain, from other UEs, the file blocks that are unsent by the network side to each UE, each UE can obtain the complete file according to the file blocks obtained from the network side and the file blocks obtained from other UEs, so that the process that each UE needs to obtain the complete file from the network side is avoided, thereby reducing the data transmission burden of a network side device such as an application server. In the case that the network side sends a different file block to each UE and the UE can successfully obtain other file blocks from other UEs, the data transmission burden of the network side device is always the data transmission burden of sending, by the network side device, one message, and the data transmission burden of the network side device does not increase with the increase of the number of users receiving the message. In the embodiments of the present invention, since the UE may obtain the file blocks from other UEs, a plurality of file transmission source devices exists. In the embodiments of the present invention, since a plurality of file transmission sources is distributed, the file transmission rate in the message service can be improved as compared with a single file transmission source device.

A method for implementing a message service according to an embodiment of the present invention is illustrated in the following with reference to the accompanying drawings.

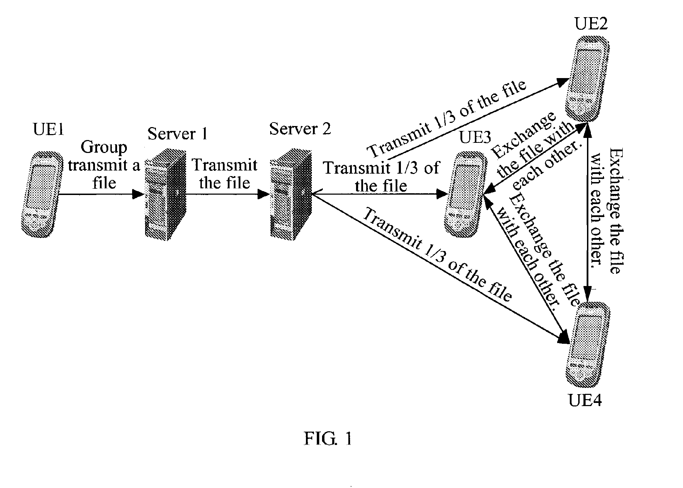

An implementation process of a message service is as shown in FIG. 1.

In FIG. 1, a UE1 sends a message to a server 1, and receivers of the message are UE2, UE3 and UE4. A file of the message is transmitted, by the UE1, to the server 1. Since the UE2, UE3 and UE4 belong to a server 2, the server 1 sends the received file to the server 2. After receiving the file, the server 2 uses a message session relay protocol (MSRP) to divide the file into three file blocks: a file block 1, a file block 2, and a file block 3 (taking each file block being 1/3 of the file for example in this embodiment). The server 2 sends the file block 1 to the UE2, the file block 2 to the UE3, and the file block 3 to the UE4. Meanwhile, the server 2 sends notification information to the UE2, UE3 and UE4 separately, so as to assist establishing connections among the UE2, UE3 and UE4.

The server 2 may extend an SDP message so as to send the file blocks and notification information, for example, extend an "a" line, a=user-selector:<address and file block>, where the address is an address of a UE, and the file block is file block information received by the UE. A specific example of extension of the "a" line is shown as follows:
a=user-selector:path: "msrp://atlanta1.example.com:7654/jshA7we;tcp" byte-range:"1-2048,2049-4096"
a=user-selector:path:"msrp://atlanta2.example.com:6666/jshA7we;tcp" byte-range:"6145-8192"

Here, the address of one UE is msrp://atlantal.example.com:7654/jshA7we;tcp, and the byte range of the file blocks received by the UE in the file is 1-2048, 2049-4096. The address of another UE is msrp://atlanta2.example.com:6666/jshA7we;tcp, and the byte range of the file blocks received by the UE in the file is 6145-8192.

After the UE2, UE3 and UE4 receive the file blocks and the notification information, a connection is established between the UE2 and the UE3, a connection is established between the UE2 and the UE4, and a connection is established between the UE3 and the UE4, so that the UE2 obtains the file block 2 from the UE3 and the file block 3 from the UE4, the UE3 obtains the file block 1 from the UE2 and the file block 3 from the UE4, and the UE4 obtains the file block 1 from the UE2 and the file block 2 from the UE3. The UE2, UE3 and UE4 separately organize and combine the obtained file blocks, and thus obtain the complete file of the message service.

It can be seen from the description of the figure that, the data transmission processing load of the server 2 is one file, and although the number of receiver UEs is 3, the data transmission processing load of the server 2 is not three files.

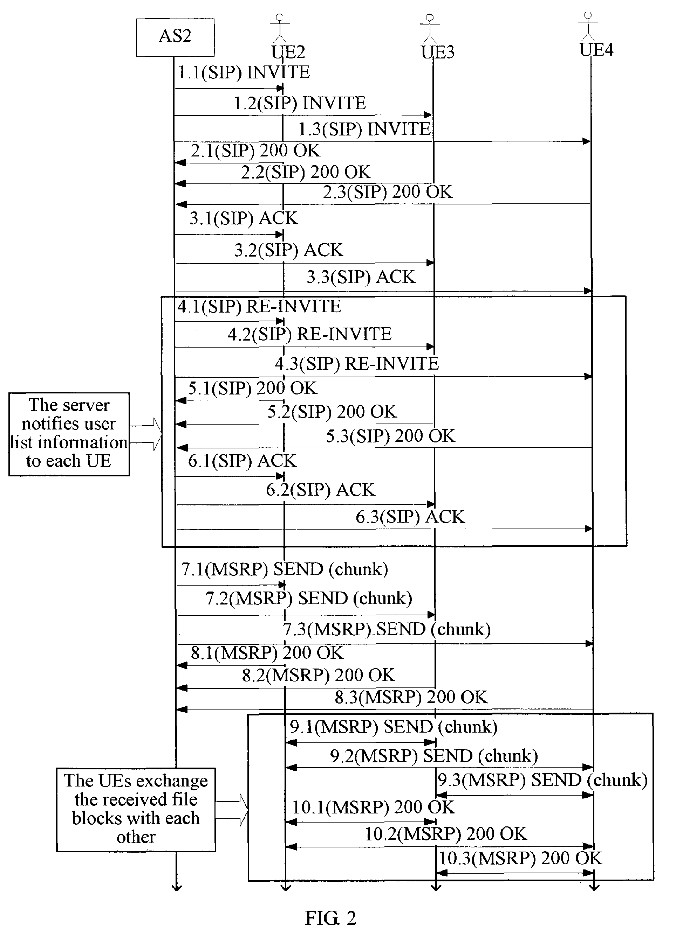

In the embodiment of the present invention, a specific implementation process of a message service is as shown in FIG. 2.

In FIG. 2, in step 1.1, an application server AS2 sends a session initiation protocol (SIP) INVITE to a UE2, and notifies server information of the AS2 and file information to the UE2 through an SDP message. The server information is, for example, server address information, and the file information is, for example, file name information.

In step 1.2, the AS2 sends an SIP INVITE to a UE3, and notifies the server information of the AS2 and the file information to the UE3 through an SDP message.

In step 1.3, the AS2 sends an SIP INVITE to a UE4, and notifies the server information of the AS2 and the file information to the UE4 through an SDP message.

It should be noted that steps 1.1, 1.2 and 1.3 may be performed concurrently or in any sequence.

In step 2.1, after receiving the SIP INVITE, the UE2 replies an SIP 200 OK to the AS2, so as to notify information of the UE2 to the AS2. The information is, for example, address information of the UE2.

In step 2.2, after receiving the SIP INVITE, the UE3 replies an SIP 200 OK to the AS2, so as to notify information of the UE3 to the AS2.

In step 2.3, after receiving the SIP INVITE, the UE4 replies an SIP 200 OK to the AS2, so as to notify information of the UE4 to the AS2.

In step 3.1, after receiving the SIP 200 OK returned by the UE2, the AS2 replies an acknowledgement (ACK) response to the UE2.

In step 3.2, after receiving the SIP 200 OK returned by the UE3, the AS2 replies an ACK response to the UE3.

In step 3.3, after receiving the SIP 200 OK returned by the UE4, the AS2 replies an ACK response to the UE4.

In step 4.1, the AS2 sends user list information to the UE2 through an extended SDP message (such as RE-INVITE).

In step 4.2, the AS2 sends user list information to the UE3 through an extended SDP message (such as RE-INVITE).

In step 4.3, the AS2 sends user list information to the UE4 through an extended SDP message (such as RE-INVITE).

A specific format of the SDP message having an extended "a" line is as follows:
v=0
o=altanta 2890844526 2890844526 IN IP4 altantapc.example.com
s=
c=IN IP4 alicepc.example.com
t=0 0
m=message 7654 TCP/MSRP *
a=accept-types:image/jpeg
a=file-selector:hash:SHA:72245FE8653DDAF371362F86D471913EE4A2CE2E
a=user-selector:path:"msrp://atlanta1.example.com:7654/jshA7we;tcp" byte-range:"1-2048,2049-4096,4097-6145"
a=user-selector:path:"msrp:/latlanta2.example.com:6666/jshAlhe;tcp" byte-range: "614b-8192,8193-10240,10241-12288" "
a=user-selector:path:"msrp://atlanta3.example.com:8888/jshA2his;tcp" byte-range:"12289-14336,14337-16384, 16385-18432"

Here, the specific meaning of the extended "a" line: a=user-selector:<address and file blocks>, is as follows:
the listen address of the UE2 is: msrp://atlantal.example.com:7654/jshA7we;tcp
the file blocks possessed by the UE2 are: byte-range:"l-2048,2049-4096,4097-6145" "
the listen address of the UE3 is: msrp://atlanta2.example.com:6666/jshAlhe;tcp
the file blocks possessed by the UE3 are: byte-range:"6146-8192,8193-10240,10241-12288"
the listen address of the UE4 is: msrp://atlanta3.example.com:8888/jshA2his;tcp
the file blocks possessed by the UE4 are: byte-range:"12289-14336,14337-16384, 16385-18432"

The listen address is the address information of the UE2, and the possessed file blocks are the file block information received by the UE from the network side.

It should be noted that steps 4.1, 4.2 and 4.3 may be performed concurrently or in any sequence.

In step 5.1, after receiving the RE-INVITE, the UE2 replies an SIP 200 OK response to the AS2.

In step 5.2, after receiving the RE-INVITE, the UE3 replies an SIP 200 OK response to the AS2.

In step 5.3, after receiving the RE-INVITE, the UE4 replies an SIP 200 OK response to the AS2.

In step 6.1, after receiving the SIP 200 OK returned by the UE2, the AS2 replies an ACK response to the UE2.

In step 6.2, after receiving the SIP 200 OK returned by the UE3, the AS2 replies an ACK response to the UE3.

In step 6.3, after receiving the SIP 200 OK returned by the UE4, the AS2 replies an ACK response to the UE4.

Thus, the AS2 establishes a TCP connection with each UE, and may send the file blocks to each UE through the MSRP.

In step 7.1, the AS2 sends file blocks of byte-range:l-2048, byte-range:2049-4096, and byte-range:4097-6145 to the UE2 through the MSRP.

In step 7.2, the AS2 sends file blocks of byte-range:6146-8192, byte-range:8193-10240, and byte-range: 10241-12288 to the UE3 through the MSRP.

In step 7.3, the AS2 sends file blocks of byte-range:12289-14336, byte-range:14337-16384, and byte-range: 16385-18432 to the UE4 through the MSRP.

It should be noted that steps 7.1, 7.2 and 7.3 may be performed concurrently or in any sequence.

In step 8.1, after receiving the file blocks, the UE2 replies an MSRP 200 OK response to the AS2.

In step 8.2, after receiving the file blocks, the UE3 replies an MSRP 200 OK response to the AS2.

In step 8.3, after receiving the file blocks, the UE4 replies an MSRP 200 OK response to the AS2.

In step 9.1, according to the received user list information, the UE2 and the UE3 exchange the received file blocks.

In step 9.2, according to the received user list information, the UE2 and the UE4 exchange the received file blocks.

In step 9.3, according to the received user list information, the UE3 and the UE4 exchange the received file blocks.

In step 10.1, after exchanging the file blocks, the UE2 and the UE3 send an MSRP 200 OK response to each other.

In step 10.2, after exchanging the file blocks, the UE2 and the UE4 send an MSRP 200 OK response to each other.

In step 10.3, after exchanging the file blocks, the UE3 and the UE4 send an MSRP 200 OK response to each other.

In the above description of FIG. 2, if a UE (for example, the UE2) is shut down and other UEs cannot successfully obtain the file blocks from the UE (for example, the UE2), other UEs (for example, the UE3 and the UE4) may request the AS2 for the missing file blocks again (for example, request the AS2 for the file blocks of byte-range:l-2048, byte-range:2049-4096, and byte-range:4097-6145). The UE may use the existing draft-garcia-mmusic-file-transfer-mech-01 protocol to implement the process of requesting the AS2 for the file blocks. Moreover, in FIG. 2, the number of receiver UEs is illustrated by taking 3 as an example. If the number of UEs needed to be connected (the number of receiver UEs) exceeds a maximum number of TCP connections supported by the AS2, the AS2 even can establish connections with a part of UEs, and then notify the UEs to establish connections with each other, so as to enable the UEs to transmit the file blocks to each other.

It should be particularly noted that, in the above description of the figure, the embodiment of the present invention is illustrated by taking an IMS domain as an example, which does not mean that the method for implementing file transmission in a message service according to the embodiment of the present invention can only be applied in the IMS domain. When the method is applied in other network domains, the implementation process is basically the same as that described in the above embodiment, with possible differences including: change of the name of the extended message, change of the name of the network entity, and change of the message flow direction. However, in essence, both the implementation processes adopt the solution of dividing, by the network side, the file into file blocks for transmission and adopting the P2P technology among UEs to obtain the corresponding file blocks; and can make full use of the existing message flows. The implementation process in other network domains will not be repeatedly illustrated herein.

An apparatus for implementing file transmission in a message service according to an embodiment of the present invention is illustrated in the following.

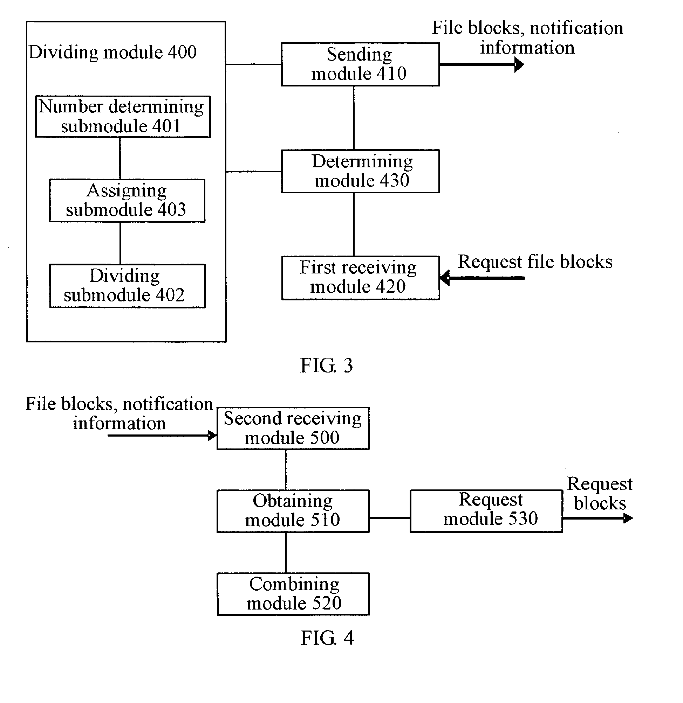

The apparatus for implementing file transmission in a message service according to the embodiment of the present invention is as shown in FIG. 3. The apparatus is configured in a network side device such as an application server.

The apparatus in FIG. 3 includes a dividing module 400 and a sending module 410. Optionally, the apparatus may further include a first receiving module 420 and a determining module 430.

When the network side device needs to send a file of a message service to a plurality of receiver UEs, the dividing module 400 in the network side device divides the file of the message service into at least two file blocks. The message service may be a message service in an IMS domain, or a message service in other network domains. The message service may be initiated by the UE or actively initiated by the network side. The file may be in the form of texts, images, audios, videos, games or the like. Moreover, the dividing module 400 may determine whether to divide the file of the message service into file blocks, and the dividing module 400 may determine the number of divided file blocks of the file according to a file allocation algorithm. The details are as described in the above method embodiment.

The dividing module 400 may include a number determining submodule 401, an assigning submodule 403, and a dividing submodule 402.

When the file needs to be divided into a plurality of file blocks, the number determining submodule 401 determines the number m of receiver UEs of the message service, and outputs the m, where the m is greater than 1. Definitely, the number determining submodule 401 may also output m by other means, for example, the output m is the number of receivers plus 1, or for another example, the number determining submodule 401 outputs a preset value. The details are as described in the above embodiment.

The dividing submodule 402 divides the file of the message service into file blocks according to the m output by the number determining submodule 401.

The value output by the number determining submodule 401 may be checked by the assigning submodule 403 first, for example, when the assigning submodule 403 determines that the m output by the number determining submodule 401 exceeds a preset value, the assigning submodule 403 assigns the preset value to the m, and sends the modified m to the dividing submodule 402. Here, the preset value may be a maximum number of TCP connections of the network side device or a value set by the manager according to the actual operating condition of the network. The details are as described in the above embodiment.

After the dividing module 400 divides the file into file blocks, the sending module 410 transmits the at least two file blocks divided by the dividing module 400 to at least two UEs.

The sending module 410 needs to deliver notification information of obtaining the file blocks to each UE, where the notification information is used for notifying the UE to obtain un-received file blocks from other UEs. The sending module 410 may deliver the file blocks and the notification information to the UE in different methods. For example, the file blocks and the notification information may be sent to the UE through the same message or data packet, or the file blocks and the notification information may be sent to the UE through different messages or data packets, for example, the notification information is sent first and then the file blocks are sent to the UE. Moreover, the sending module 410 may deliver only the notification information to a certain UE, or deliver both the file blocks and the notification information to the UE, and one or more file blocks may be delivered to the UE. The sending module 410 may determine, according to the file allocation algorithm, to send what file blocks to which UEs. The details are as described in the above embodiment.

The first receiving module 420 receives information of requesting the file blocks sent by the UE. The determining module 430 determines the file blocks requested by the UE according to the information received by the first receiving module 420, and notifies the sending module 410 to send the file blocks requested by the UE. The determining module 430 may notify the sending module 410 to send the file blocks to a certain UE, or notify the sending module 410 to send the file blocks to a plurality of UEs, for example, send the requested file blocks to each UE. The details are as described in the above embodiment.

Since the apparatus can send one or more file blocks again according to the request of the UE, a storing module in the apparatus needs to store the sent file blocks. The storing module in the apparatus may store the file rather than the file blocks. At this time, after the first receiving module 420 receives the request, the determining module 430 notifies the dividing module 400 to divide the file into file blocks again, and then the determining module 430 notifies the sending module 410 to send the requested file blocks to one or more UEs. The apparatus may further include an aging processing module configured to perform aging processing on the file blocks or the file stored in the storing module. The aging processing module may adopt the existing aging processing methods to perform the aging processing, and the details will not be described herein again.

A UE according to an embodiment of the present invention is as shown in FIG. 4.

The UE in FIG. 4 includes a second receiving module 500, an obtaining module 510, and a combing module 520. Optionally, the UE may further include a request module 530.

The second receiving module 500 receives information transmitted by a network side, where the information may be notification information, or file blocks and the notification information, and definitely may be all file blocks.

The obtaining module 510 establishes connections with other UEs according to the notification information received by the second receiving module 500, and obtains, from other UEs, file blocks that are un-received by the second receiving module 500 from the network side. The obtaining module 510 may establish a connection with another UE according to the notification information, so as to obtain all file blocks that are unsent by the network side to the UE that the obtaining module 510 belongs to; or the obtaining module 510 may establish connections with a plurality of other UEs according to the notification information, so as to obtain all file blocks that are unsent by the network side to the UE that the obtaining module 510 belongs to. This depends on an algorithm used by the network side for sending the file blocks to the UE, and the details are as described in the above embodiment.

The combining module 520 combines the file blocks obtained by the UE into a file of a message service. The file blocks obtained by the UE to which the combining module 520 belongs may be only all file blocks received by the second receiving module 500 from the network side, or may be the file blocks received by the second receiving module 500 from the network side and the file blocks obtained by the obtaining module 510 from other UEs, or may be only all file blocks obtained by the obtaining module 510 from other UEs.

After determining that the obtaining module 510 fails to successfully obtain the file blocks from other UEs, the request module 530 requests the network side for the file blocks failing to be successfully obtained. There are many reasons why the obtaining module 510 fails to successfully obtain, from other UEs, the file blocks that are unsent by the network side to the UE that the obtaining module 510 belongs to, and the details are as described in the above embodiment.

Through the above description of the embodiments, it is clear to persons skilled in the art that the present invention may be accomplished through software plus a necessary hardware platform, and definitely may also be accomplished through hardware, but in most cases, the present invention is preferably implemented through the former method. Based on this, the technical solutions of the present invention or the part that makes contributions to the prior art can be substantially embodied in the form of a software product. The computer software product may be stored in a storage medium such as a ROM/RAM, a magnetic disk or an optical disk, and contain several instructions used for instructing computer equipment (for example, a personal computer, a server, or network equipment) to perform the method described in the embodiments of the present invention or in some parts of the embodiments.

Although the present invention has been described through several embodiments, it is known to persons skilled in the art that various modifications and variations can be made without departing from the present invention.

## Claims

1. A method for transmitting files over a telecommunication network offering a message service, comprising:
dividing, by an application server, a file of the message service that needs to be sent to user equipments, UEs, into at least two file blocks; and
transmitting, by the application server, the divided file blocks to at least two UEs separately, **characterized by** delivering, by the application server, notification information to each UE, so as to enable the UE to obtain un-received file blocks from other UEs,
wherein the delivering, by the application server, the notification information to each UE comprises:
sending, by the application server, address information of the UEs and file block information received by the UEs to each UE; and
the method further comprises:
receiving, by the application server, information of requesting the file blocks sent by the UE when determining, by the UE, that the file blocks fail to be successfully obtained from other UE; and
determining, by the application server, the file blocks requested by the UE and sending the file blocks requested by the UE.

2. The method according to claim 1, wherein the dividing, by the application server, the file of the message service that needs to be sent to the UEs into the at least two file blocks comprises:
determining, by the application server, the number m of receiver UEs of the message service, and dividing the file into m file blocks, wherein the m is a natural number greater than 1.

3. The method according to claim 2, wherein before the dividing the file into the m file blocks, the method further comprises:
when determining that the m exceeds a preset value, assigning, by the application server, the preset value to the m.

4. The method according to claim 3, wherein the preset value comprises a maximum number of transfer control protocol, TCP, connections of the application server.

5. The method according to claim 2, wherein the transmitting, by the application server, the at least two file blocks to the at least two UEs separately comprises:
transmitting, by the application server, the m file blocks to m UEs separately, so that one UE receives one file block.

6. The method according to claim 1, wherein the delivering the notification information of obtaining the file blocks to each UE comprises:
carrying, by the application server, the notification information in a session description protocol, SDP, message, and sending the SDP message to each UE.

7. A method for implementing a message service, **characterized by** comprising:
receiving, by a user equipment, UE, notification information transmitted by an application server, wherein the notification information comprises address information of the UEs and file block information received by the UEs;
establishing, by the UE, connections with other UEs according to the notification information, and obtaining un-received file blocks from other UEs;
combining, by the UE, the obtained file blocks into a file of the message service, and
when determining that the file blocks fail to be successfully obtained from other UEs, requesting, by the UE, the application server for the file blocks failing to be successfully obtained.

8. An application server, comprising:
a dividing module (400), configured to divide a file of the message service that needs to be sent to user equipments, UEs, into at least two file blocks; and
a sending module (410), configured to transmit the file blocks divided by the dividing module (400) to at least two UEs separately, **characterized in that** the sending module (410) is configured to deliver notification information to each UE, so as to enable the UE to obtain un-received file blocks from other UEs, wherein the notification information comprises address information of the UEs and file block information received by the UEs;
a first receiving module (420), configured to receive information of requesting the file blocks sent by the UE when determining, by the UE, that the file blocks fail to be successfully obtained from other UE; and
a determining module (430), configured to determine the file blocks requested by the UE according to the information received by the first receiving module (420), and notify the sending module (410) to send the file blocks requested by the UE.

9. The application server according to claim 8, wherein the dividing module (400) further comprises:
a number determining submodule (401), configured to determine the number m of receiver UEs of the message service, wherein the m is a natural number greater than 1; and
a dividing submodule (402), configured to divide the file into m file blocks according to the m.

10. The application server according to claim 9, wherein the dividing module (400) further comprises:
an assigning submodule (403), configured to assign a preset value to the m when it is determined that the m output by the number determining submodule (401) exceeds the preset value, and send the m to the dividing submodule (402).

11. A user equipment, UE, **characterized by** comprising:
a receiving module (500), configured to receive notification information transmitted by an application server, wherein the notification information comprises address information of the UEs and file block information received by the UEs;
an obtaining module (510), configured to establish connections with other UEs according to the notification information received by the receiving module (500), and obtain, from other UEs, file blocks that are un-received by the UE, to which the obtaining module (510) belongs, from the application server;
a combining module (520), configured to combine the file blocks obtained by the UE into a file of a message service; and
a request module (530), configured to request the application server for the file blocks failing to be successfully obtained when it is determined that the obtaining module (510) fails to successfully obtain the file blocks from other UEs.

## Patentansprüche

1. Verfahren zum Übertragen von Dateien über ein Telekommunikationsnetz, das einen Nachrichtendienst anbietet, wobei das Verfahren Folgendes umfasst:
Aufteilen einer Datei des Nachrichtendienstes, die zu Anwendergeräten (user equipments, UEs) übertragen werden soll, durch einen Anwendungsserver in wenigstens zwei Dateiblöcke; und
getrenntes Übertragen der aufgeteilten Dateiblöcke durch den Anwendungsserver zu wenigstens zwei UEs, **gekennzeichnet durch** Zustellen von Meldungsinformationen durch den Anwendungsserver zu jedem UE, um zu ermöglichen, dass das UE nicht empfangene Dateiblöcke von anderen UEs erhält,
wobei das Zustellen der Meldungsinformationen **durch** den Anwendungsserver zu jedem UE Folgendes umfasst:
Senden **durch** den Anwendungsserver von Adressinformationen der UEs und von Dateiblockinformationen, die von den UEs empfangen werden, zu jedem UE; und
wobei das Verfahren ferner Folgendes umfasst:
Empfangen von Informationen zum Anfordern der Dateiblöcke, die **durch** das UE gesendet werden, **durch** den Anwendungsserver, wenn **durch** das UE bestimmt wird, dass die Dateiblöcke nicht von einem anderen UE erfolgreich erhalten werden können; und
Bestimmen der **durch** das UE angeforderten Dateiblöcke **durch** den Anwendungsserver und Senden der **durch** das UE angeforderten Dateiblöcke.

2. Verfahren nach Anspruch 1, wobei das Aufteilen der Datei des Nachrichtendienstes, die zu den UEs gesendet werden soll, durch den Anwendungsserver in wenigstens zwei Dateiblöcke Folgendes umfasst:
Bestimmen der Anzahl m von Empfänger-UEs des Nachrichtendienstes durch den Anwendungsserver und Aufteilen der Datei in m Dateiblöcke, wobei m eine natürliche Zahl größer als 1 ist.

3. Verfahren nach Anspruch 2, wobei das Verfahren vor dem Aufteilen der Datei in die m Dateiblöcke ferner Folgendes umfasst:
wenn bestimmt wird, dass das m einen voreingestellten Wert übersteigt, Zuweisen des voreingestellten Werts zu dem m durch den Anwendungsserver.

4. Verfahren nach Anspruch 3, wobei der voreingestellte Wert eine maximale Anzahl von Übertragungssteuerprotokoll-Verbindungen, TCP-Verbindungen, des Anwendungsservers umfasst.

5. Verfahren nach Anspruch 2, wobei das getrennte Übertragen der wenigstens zwei Dateiblöcke zu den wenigstens zwei UEs durch den Anwendungsserver Folgendes umfasst:
getrenntes Übertragen der m Dateiblöcke durch den Anwendungsserver zu m UEs, so dass ein UE einen Dateiblock empfängt.

6. Verfahren nach Anspruch 1, wobei das Zustellen der Meldungsinformationen über das Erhalten der Dateiblöcke zu jedem UE Folgendes umfasst:
Führen der Meldungsinformationen in einer Sitzungsbeschreibungsprotokoll-Nachricht, SDP-Nachricht, durch den Anwendungsserver und Senden der SDP-Nachricht zu jedem UE.

7. Verfahren zum Implementieren eines Nachrichtendienstes, **dadurch gekennzeichnet, dass** es Folgendes umfasst:
Empfangen von Meldungsinformationen, die durch einen Anwendungsserver übertragen werden, durch ein Anwendergerät, UE, wobei die Meldungsinformationen Adressinformationen der UEs und Dateiblockinformationen, die durch die UEs empfangen werden, umfassen;
Aufbauen durch das UE von Verbindungen mit anderen UEs gemäß den Meldungsinformationen und Erhalten nicht empfangener Dateiblöcke von anderen UEs;
Kombinieren der erhaltenen Dateiblöcke in eine Datei des Nachrichtendienstes durch das UE, und
dann, wenn bestimmt wird, dass die Dateiblöcke nicht von anderen UEs erfolgreich erhalten werden können, Anfordern der Dateiblöcke, die nicht erfolgreich erhalten werden können, durch das UE von dem Anwendungsserver.

8. Anwendungsserver, der Folgendes umfasst:
ein Aufteilungsmodul (400), das konfiguriert ist, eine Datei des Nachrichtendienstes, die zu Anwendergeräten, UEs, übertragen werden soll, in wenigstens zwei Dateiblöcke aufzuteilen; und
ein Sendemodul (410), das konfiguriert ist, die durch das Aufteilungsmodul (400) aufgeteilten Dateiblöcke getrennt zu wenigstens zwei UEs zu übertragen, **dadurch gekennzeichnet, dass** das Sendemodul (410) konfiguriert ist, Meldungsinformationen zu jedem UE zuzustellen, um zu ermöglichen, dass das UE nicht empfangene Dateiblöcke von anderen UEs erhält, wobei die Meldungsinformationen Adressinformationen der UEs und durch die UEs empfangene Dateiblockinformationen umfassen;
ein erstes Empfangsmodul (420), das konfiguriert ist, durch das UE gesendete Informationen zum Anfordern der Dateiblöcke zu empfangen, wenn durch das UE bestimmt wird, dass die Dateiblöcke nicht von einem anderen UE erfolgreich erhalten werden können; und
ein Bestimmungsmodul (430), das konfiguriert ist, die Dateiblöcke, die durch das UE angefordert werden, gemäß den durch das erste Empfangsmodul (420) empfangenen Informationen zu bestimmen und dem Sendemodul (410) zu melden, die durch das UE angeforderten Dateiblöcke zu senden.

9. Anwendungsserver nach Anspruch 8, wobei das Aufteilungsmodul (400) ferner Folgendes umfasst:
ein Anzahlbestimmungsuntermodul (401), das konfiguriert ist, die Anzahl m von Empfänger-UEs des Nachrichtendienstes zu bestimmen, wobei m eine natürliche Zahl größer als 1 ist; und
ein Aufteilungsuntermodul (402), das konfiguriert ist, die Datei gemäß dem m in m Dateiblöcke aufzuteilen.

10. Anwendungsserver nach Anspruch 9, wobei das Aufteilungsmodul (400) ferner Folgendes umfasst:
ein Zuweisungsuntermodul (403), das konfiguriert ist, dem m einen voreingestellten Wert zuzuweisen, wenn bestimmt wird, dass das durch das Anzahlbestimmungsuntermodul (401) ausgegebene m den voreingestellten Wert übersteigt, und das m zu dem Aufteilungsuntermodul (402) zu senden.

11. Anwendergerät, UE, **dadurch gekennzeichnet, dass** es Folgendes umfasst:
ein Empfangsmodul (500), das konfiguriert ist, Meldungsinformationen, die durch einen Anwendungsserver übertragen werden, zu empfangen, wobei die Meldungsinformationen Adressinformationen der UEs und Dateiblockinformationen, die durch die UEs empfangen werden, umfassen;
ein Erhaltemodul (510), das konfiguriert ist, Verbindungen mit anderen UEs gemäß den durch das Empfangsmodul (500) von dem Anwendungsserver empfangenen Meldungsinformationen aufzubauen, und von anderen UEs Dateiblöcke, die durch das UE, zu dem das Erhaltemodul (510) gehört, nicht empfangen sind, zu erhalten, ein Kombinationsmodul (520), das konfiguriert ist, die durch das UE erhaltenen Dateiblöcke in eine Datei eines Nachrichtendienstes zu kombinieren; und
ein Anförderungsmodul (530), das konfiguriert ist, die Dateiblöcke, die nicht erfolgreich erhalten werden können, von dem Anwendungsserver anzufordern, wenn bestimmt wird, dass das Erhaltemodul (510) die Dateiblöcke nicht von anderen UEs erfolgreich erhalten kann.

## Revendications

1. Procédé permettant de transmettre des fichiers sur un réseau de télécommunication offrant un service de messagerie, comprenant les étapes suivantes :
diviser, par un serveur d'application, un fichier du service de messagerie qui doit être envoyé à des équipements utilisateur, UE, en au moins deux blocs de fichier ; et
transmettre, par le serveur d'application, les blocs de fichier divisés à au moins deux UE séparément, **caractérisé par**
délivrer, par le serveur d'application, des informations de notification à chaque UE, afin de permettre à l'UE d'obtenir des blocs de fichier non reçus à partir d'autres UE, l'étape consistant à délivrer, par le serveur d'application, les informations de notification à chaque UE comprenant :
envoyer, par le serveur d'application, des informations d'adresse des UE et des informations de bloc de fichier reçues par les UE à chaque UE ; et
le procédé comportant en outre les étapes suivantes :
recevoir, par le serveur d'application, des informations de requête des blocs de fichier envoyées par l'UE lors de la détermination, par l'UE, que les blocs de fichier n'ont pas été obtenus avec succès à partir d'un autre UE ; et
déterminer, par le serveur d'application, les blocs de fichier demandés par l'UE et envoyer les blocs de fichier demandés par l'UE.

2. Procédé selon la revendication 1, dans lequel l'étape consistant à diviser, par le serveur d'application, le fichier du service de messagerie qui doit être envoyé aux UE en lesdits au moins deux blocs de fichier comprend :
déterminer, par le serveur d'application, le nombre m d'UE destinataires du service de messagerie, et diviser le fichier en m blocs de fichier, m étant un nombre entier naturel supérieur à 1.

3. Procédé selon la revendication 2, comprenant en outre avant l'étape consistant à diviser le fichier en les m blocs de fichier :
lors de la détermination que m excède une valeur prédéfinie, affecter, par le serveur d'application, la valeur prédéfinie à m.

4. Procédé selon la revendication 3, dans lequel la valeur prédéfinie comprend un nombre maximum de connexions de protocole de contrôle de transfert, TCP, du serveur d'application.

5. Procédé selon la revendication 2, dans lequel l'étape consistant à transmettre, par le serveur d'application, lesdits au moins deux blocs de fichier auxdits au moins deux UE séparément comprend :
transmettre, par le serveur d'application, les m blocs de fichier aux m UE séparément, de telle sorte qu'un UE reçoive un bloc de fichier.

6. Procédé selon la revendication 1, dans lequel l'étape consistant à délivrer les informations de notification d'obtention des blocs de fichier à chaque UE comprend :
acheminer, par le serveur d'application, les informations de notification dans un message de protocole de description de session, SDP, et envoyer le message SDP à chaque UE.

7. Procédé permettant de mettre en oeuvre un service de messagerie, **caractérisé en ce qu'**il comprend les étapes suivantes :
recevoir, par un équipement utilisateur, UE, des informations de notification transmises par un serveur d'application, les informations de notification comportant des informations d'adresse des UE et des informations de bloc de fichier reçues par les UE ;
établir, par l'UE, des connexions avec d'autres UE selon les informations de notification, et obtenir des blocs de fichier non reçus à partir des autres UE ;
combiner, par l'UE, les blocs de fichier obtenus en un fichier du service de messagerie, et
lors de la détermination que les blocs de fichier n'ont pas été obtenus avec succès à partir d'autres UE, demander au serveur d'application, par l'UE, les blocs de fichier qui n'ont pas été obtenus avec succès.

8. Serveur d'application, comprenant :
un module de division (400), configuré pour diviser un fichier du service de messagerie qui doit être envoyé à des équipements utilisateur, UE, en au moins deux blocs de fichier ; et
un module d'envoi (410), configuré pour transmettre les blocs de fichier divisés par le module de division (400) à au moins deux UE séparément, **caractérisé en ce que** le module d'envoi (410) est configuré pour délivrer des informations de notification à chaque UE, afin de permettre à l'UE d'obtenir des blocs de fichier non reçus à partir d'autres UE, les informations de notification comportant des informations d'adresse des UE et des informations de bloc de fichier reçues par les UE ;
un premier module de réception (420), configuré pour recevoir des informations de requête des blocs de fichier envoyées par l'UE lors de la détermination, par l'UE, que les blocs de fichier n'ont pas été obtenus avec succès à partir d'un autre UE ; et
un module de détermination (430), configuré pour déterminer les blocs de fichier demandés par l'UE selon les informations reçues par le premier module de réception (420), et notifier au module d'envoi (410) d'envoyer les blocs de fichier demandés par l'UE.

9. Serveur d'application selon la revendication 8, dans lequel le module de division (400) comprend en outre :
un sous-module de détermination de nombre (401), configuré pour déterminer le nombre m d'UE destinataires du service de messagerie, m étant un nombre entier naturel supérieur à 1 ; et
un sous-module de division (402), configuré pour diviser le fichier en m blocs de fichier selon m.

10. Serveur d'application selon la revendication 9, dans lequel le module de division (400) comprend en outre :
un sous-module d'affectation (403), configuré pour affecter une valeur prédéfinie à m lorsqu'il est déterminé que le nombre m délivré par le sous-module de détermination de nombre (401) excède la valeur prédéfinie, et envoyer le nombre m au sous-module de division (402).

11. Équipement utilisateur, UE, **caractérisé en ce qu'**il comprend :
un module de réception (500), configuré pour recevoir des informations de notification transmises par un serveur d'application, les informations de notification comportant des informations d'adresse des UE et des informations de bloc de fichier reçues par les UE ;
un module d'obtention (510), configuré pour établir des connexions avec d'autres UE selon les informations de notification reçues par le module de réception (500), et obtenir, à partir d'autres UE, des blocs de fichier qui n'ont pas été reçus par l'UE, auquel le module d'obtention (510) appartient, à partir du serveur d' application ;
un module de combinaison (520), configuré pour combiner les blocs de fichier obtenus par l'UE en un fichier d'un service de messagerie ; et
un module de requête (530), configuré pour demander au serveur d'application les blocs de fichier qui n'ont pas été obtenus avec succès lorsqu'il est déterminé que le module d'obtention (510) n'a pas obtenu avec succès les blocs de fichier à partir d'autres UE.
